# EUROPÄISCHE PATENTSCHRIFT

(11) **EP 2 563 626 B1**
(45) Veröffentlichungstag und Bekanntmachung des Hinweises auf die Patenterteilung: **21.01.2015**
(21) Anmeldenummer: 11711272.2
(22) Anmeldetag: 22.03.2011
(51) Int. Cl.: B60R 22/46

(54) **STRAFFERVORRICHTUNG FÜR EINEN SICHERHEITSGURT**
TENSIONING DEVICE FOR A SAFETY BELT
DISPOSITIF TENDEUR CONÇU POUR UNE CEINTURE DE SÉCURITÉ

(30) Priorität: 27.04.2010 DE 102010018513
(43) Veröffentlichungstag der Anmeldung: 06.03.2013
(73) Patentinhaber: Autoliv Development AB, 447 83 Vårgårda (SE)
(72) Erfinder: SCHMIDT, Thomas, 23669 Timmendorfer Strand (DE); SCHMIDT, Martin, 25337 Elmshorn (DE); FISCHER, Christian, 22297 Hamburg (DE); PECH, Michael, 22529 Hamburg (DE); STEINBERG, Matthias, 25368 Kiebitzreihe (DE); VOSS, Tobias, 25336 Klein Nordende (DE); MESECKE-RISCHMANN, Simone, 22145 Hamburg (DE)
(74) Vertreter: Müller Verweyen
(86) Internationale Anmeldenummer: PCT/EP2011/001406
(87) Internationale Veröffentlichungsnummer: WO 2011/134574

(56) Entgegenhaltungen:
- WO-A1-2009/124664
- DE-A1-102007 028 980
- DE-A1-102008 032 371
- US-B1- 6 446 897

## Beschreibung

Die Erfindung betrifft eine Straffervorrichtung für einen Sicherheitsgurt, insbesondere in einem Kraftfahrzeug, nach dem Oberbegriff von Anspruch 1.

Aus der DE 195 12 660 A1 ist ein Gurtstraffer bekannt, welcher eine Antriebseinrichtung mit einem in einem Rohr geführten Kolben aufweist, welcher durch einen von einem Gasgenerator erzeugten Druck angetrieben wird. Zur Übertragung der Straffbewegung des Kolbens ist eine Massekörperkette vorgesehen, welche die Straffbewegung des Kolbens über ein Antriebsrad auf eine Gurtwelle eines Gurtaufrollers überträgt. Der Kolben hat dabei die Aufgabe, einen mittels eines Gasgenerators mit Druck beaufschlagten Druckraum abzudichten und die Massekörperkette durch direkte Anlage an dem ersten Massekörper anzutreiben.

DE102008032371 A1 beschreibt eine Straffvorichtung gemäß den Oberbegriff des Patentanspruchs 1.

Grundsätzlich ergeben sich hieraus unterschiedliche Anforderungen an den Kolben. Der Kolben muss eine ausreichende Festigkeit auch bei hohen Temperaturen aufweisen, damit der Kolben die Straffkraft übertragen kann, ohne dabei selbst zerstört zu werden oder aufzuschmelzen. Ferner sollte der Kolben eine ausreichende Elastizität aufweisen, damit er den Druckraum auch bei kleineren seitlichen Relativbewegungen zu dem Rohr bzw. in einem gekrümmten Rohrverlauf dichtend abschließt.

Aufgabe der Erfindung ist es daher, eine gattungsgemäße Straffervorrichtung bereitzustellen, bei der der Kolben hinsichtlich der an ihn gestellten Anforderungen ideal ausgelegt werden kann.

Die Lösung der Aufgabe erfolgt erfindungsgemäß durch eine Straffervorrichtung mit den Merkmalen des Anspruchs 1. Weitere bevorzugte Ausführungsformen sind den Unteransprüchen, der Beschreibung und den zugehörigen Figuren zu entnehmen.

Zur Lösung der Aufgabe wird erfindungsgemäß vorgeschlagen, dass der Kolben wenigstens zweiteilig aus einem Grundkörper und einem an der dem Massekörper zugewandten Seite des Grundkörpers angeordneten Anlageteil gebildet ist, wobei die Stirnfläche an dem Anlageteil angeordnet ist, und das Anlageteil eine höhere Festigkeit als der Grundkörper aufweist. Durch die vorgeschlagene Lösung kann der Kolben im Bereich der Stirnfläche, an der der Massekörper anliegt, zur Übertragung der Straffkraft bewusst fester ausgebildet werden, so dass er sich unter den wirkenden Kräften in diesem Bereich nicht verformt. Gleichzeitig kann der Kolben durch den weicheren Grundkörper zumindest im Bereich der an der Rohrwandung anliegenden Dichtfläche ausreichend elastisch ausgebildet werden, so dass er durch geringfügige Formänderungen Relativbewegungen zu der Rohrwandung ausführen kann und dadurch den dichtenden Kontakt zu der Rohrwandung, z.B. in einer gekrümmten Rohrführung, nicht verliert.

Weiter wird vorgeschlagen, dass das Anlageteil über eine Pressverbindung mit dem Grundkörper verbunden ist. Die Verwendung einer Pressverbindung ist eine kostengünstige Lösung zur Verbindung beider Teile, wobei die unterschiedliche Festigkeit der beiden Teile dabei den Vorteil bietet, dass sich eines der Teile bei der Verbindung verformen kann und das jeweils festere Teil nach der Verbindung die Formstabilität des Kolbens schafft. Da bei Teile während der Straffbewegung des Kolbens zusammengepresst werden, besteht dabei keine Gefahr, dass sich die beiden Teile während des Straffvorganges voneinander lösen.

Eine weitere bevorzugte Ausgestaltung der Erfindung kann dadurch verwirklicht sein, indem das Anlageteil einen vorstehenden Kragen aufweist, mit dem es in eine an dem Grundkörper vorgesehene Ausnehmung mit einer korrespondierenden Formgebung hineinragt. Durch den in die Ausnehmung ragenden Kragen kann das Anlageteil den Grundkörper aufgrund seiner höheren Festigkeit formstabilisieren. Insbesondere wird der Grundkörper dabei insbesondere hinsichtlich der radial einwärts gerichteten Kräfte formstabilisiert, so dass der Grundkörper auch bei höheren seitlichen Kräften dichtend an der Rohrwandung anliegt.

Ferner wird vorgeschlagen, dass das Anlageteil aus einem metallischen Tiefziehteil gebildet ist. Das Anlageteil kann dadurch kostengünstig in einer Großserie hergestellt werden, wobei die an den Grundkörper angepasste Formgebung des Anlageteils während des Umformprozesses gleich mit geformt werden kann. Aufgrund der Verwendung eines metallischen Tiefziehteils weist das Anlageteil gleich die erforderliche höhere Festigkeit gegenüber dem z.B. als Kunststoffteil ausgebildeten Grundkörper auf.

Ferner können der Grundkörper und das Anlageteil ineinander übergehende Durchgangsöffnungen aufweisen, wovon wenigstens eine durch einen dünnwandigen Steg verschlossen ist, der bei einem Überschreiten eines vorbestimmten Druckes in dem Druckraum aufreißt, und eine Strömungsverbindung zwischen dem Druckraum und einem in Richtung der Straffbewegung hinter dem Kolben befindlichen Raum freigibt. Die Durchgangsöffnungen und der dünnwandige Steg bilden ein Überdruckventil, welches eine Freigabe des Druckes in dem Druckraum bei einem Überschreiten eines vorbestimmten Druckes ermöglicht. Der vorbestimmte Druck wird dabei durch die Dicke des Steges, das Material des Steges und die Anbindung des Steges zu dem Anlageteil oder zu dem Grundkörper bestimmt.

Damit der Druck aus dem Druckraum in jedem Fall auch bei an dem Kolben anliegendem Massekörper entweichen kann, wird vorgeschlagen, dass in der Stirnfläche wenigstens eine Vertiefung vorgesehen ist, welche bei an der Stirnfläche anliegendem Massekörper eine Strömungsverbindung zwischen dem Raum hinter dem Kolben und den Durchgangsöffnungen schafft.

Nachfolgend wird die Erfindung anhand mehrerer bevorzugter Ausführungsbeispiele näher beschrieben. Es zeigen:
- Fig.1:: An einen Gurtaufroller angekoppelte Straffervorrichtung mit einem in einem Rohr geführten Kolben;
- Fig.2:: Erfindungsgemäß ausgebildeter Kolben in Anlage an einem ersten Massekörper in vergrößerter Darstellung;
- Fig.3:: Kolben mit einem als metallischen Tiefziehteil ausgebildeten Anlageteil in isometrischer Ansicht;
- Fig.4:: Kolben aus der Fig.3 in Schnittdarstellung.

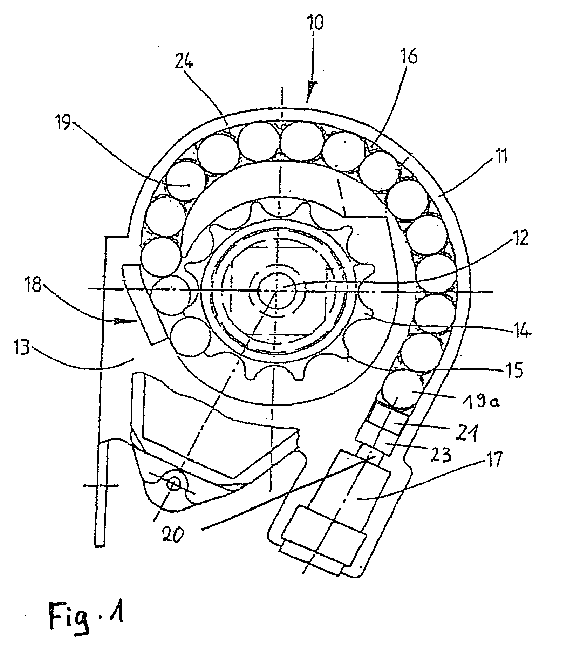

Der in Fig. 1 schematisch gezeigte Gurtaufroller umfasst ein Gehäuse 11 mit einem Seitenschenkel 13, eine darin gelagerte Gurtaufwickelwelle 12 für ein nicht dargestelltes Sicherheitsgurtband und eine nach Auslösung auf die Gurtaufwickelwelle 12 einwirkende Straffervorrichtung 10. Die Straffervorrichtung 10 umfasst ein mit der Gurtaufwickelwelle 12 drehfest verbundenes Antriebsrad 14, das beispielsweise eine Außenverzahnung 15 aufweist, einen insbesondere pyrotechnischen Gasgenerator 17 zur Erzeugung eines Gasdrucks, und ein den Gasgenerator 17 mit der Gurtaufwickelwelle 12 über das Antriebsrad 14 verbindendes Rohr 16. Das Rohr 16 wird von einer Rohrwand 24 gebildet, die Teil des Gehäuses 11 oder alternativ auch ein separates Bauteil sein kann.

In dem Rohr 16 ist eine Antriebseinrichtung in Form einer Reihe von metallischen kugelförmigen Massekörpern 19, welche die Straffbewegung über ein Antriebsrad 14 auf die Gurtaufwickelwelle 12 übertragen. Der Gurtaufroller ist hinsichtlich der Ausgestaltung des Wechselwirkungsbereichs 18 zwischen der Massekörperreihe 19 und dem Antriebsrad 14 sowie etwaiger Kupplungseinrichtungen zwischen dem Antriebsrad 14 und der Gurtaufwickelwelle 12 nicht beschränkt. Zur reibungsarmen Kraftübertragung ist der Außendurchmesser der Massekörper 19 zweckmäßigerweise etwas geringer als der Innendurchmesser des Rohres 16.

In dem Rohr 16 ist weiterhin ein in Fig. 1 nur schematisch an-gedeuteter Kolben 21 vorgesehen, der zweckmäßigerweise in einem Bereich 23 zwischen dem Gasgenerator 17 und der Massekörperreihe 19, das heißt unmittelbar vor dem in Kraftübertragungsrichtung ersten Massekörper 19a der Massekörperreihe 19 angeordnet ist. Der Kolben 21 schließt einen durch einen Gasgenerator 17 mit einem Gasdruck beaufschlagbaren Druckraum 20 in dem Rohr 16 ab, so dass der Kolben 21 bei einer Druckbeaufschlagung des Druckraumes 20 durch den Gasgenerator 17 zu einer Straffbewegung antreibbar ist. Die Straffbewegung des Kolbens 21 wird durch die Kraftübertragungseinrichtung, gebildet durch die Massekörper 19 und das Antriebsrad 14, auf die Gurtaufwickelwelle 12 übertragen, so dass das Gurtband gestrafft wird.

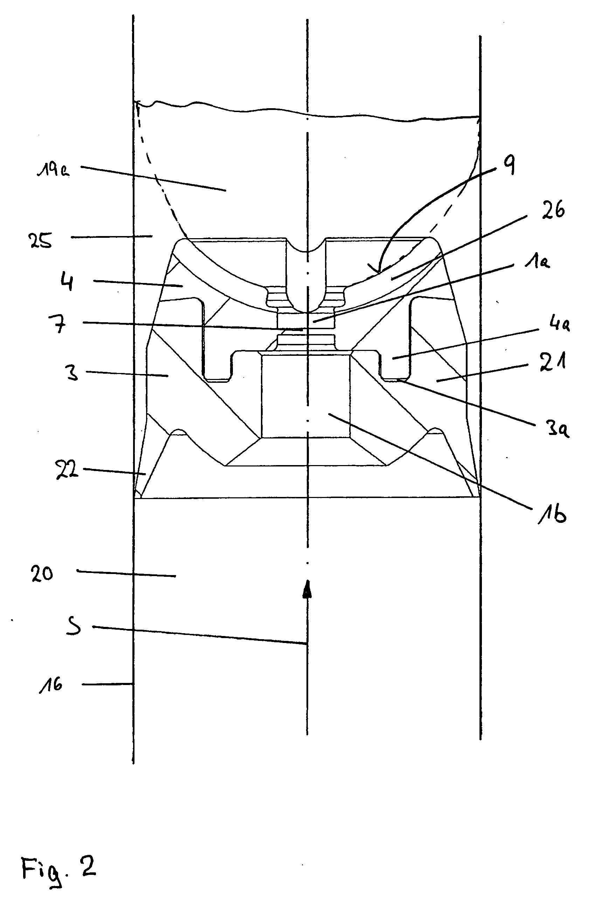

In der Fig.2 ist eine Ausführungsform des Kolbens 21 in der Anlage an dem ersten Massekörper 19a in einem Rohr 16 vergrößert zu erkennen. Der Kolben 21 ist zweiteilig aus einem Grundkörper 3 und einem Anlageteil 4 gebildet, welche in dieser Ausführungsform jeweils als Kunststoffteile gebildet sind und über eine Pressverbindung miteinander verbunden sind. Alternativ oder ergänzend wäre auch eine Klebeverbindung oder die Herstellung in einem 2K Spritzwerkzeug denkbar.

Das Anlageteil 4 weist eine höhere Festigkeit als der Grundkörper 3 auf, d.h. das Anlageteil 4 ist grundsätzlich auch unter den bei einer Aktivierung das Gasgenerators 17 herrschenden Temperaturen formfester als der Grundkörper 3 ausgebildet. Das Anlageteil 4 ragt mit einem Kragen 4a in eine Ausnehmung 3a des Grundkörpers 3 mit einer korrespondierenden Formgebung hinein und versteift dadurch zusätzlich den Grundkörper 3. An dem Anlageteil 4 ist die Stirnfläche 9 angeformt, an der der erste Massekörper 19a anliegt. Ferner weist das Anlageteil 4 in der Stirnfläche 9 Vertiefungen 26 auf, welche auch bei an der Stirnfläche 9 anliegendem Massekörper 19a eine Strömungsverbindung zwischen einer Durchgangsöffnung 1a und einem in Straffrichtung S hinter dem Kolben 21 befindlichen Raum 25 schaffen. Der Grundkörper 3 ist radial außen mit einer umlaufenden Dichtlippe 22 versehen, welche an der Innenwandung des Rohres 16 anliegt und den Druckraum 20 dichtend abschließt. In dem Grundkörper 3 ist ferner eine mit der Durchgangsöffnung 1a in dem Anlageteil 4 fluchtende Durchgangsöffnung 1b vorgesehen. In der Durchgangsöffnung 1a des Anlageteils 4 ist ein Steg 7 vorgesehen, der die Durchgangsöffnung 1a verschließt und erst bei einem Überschreiten eines vorbestimmten Druckes in dem Druckraum 20 aufreißt. Durch das Aufreißen des Steges 7 kann der Druck aus dem Druckraum 20 über die Durchgangsöffnungen 1a und 1b und die Vertiefungen 26 schließlich in den Raum 25 entweichen. Aufgrund der höheren Festigkeit des Anlageteils 4 ist der Kolben 21 auch bei den hohen Drücken und Temperaturen während des Straffvorganges im Bereich der Stirnfläche 9 ausreichend formstabil, so dass der Massekörper 19a die Vertiefungen 26 in der Stirnfläche nicht so weit zusammendrücken kann, dass diese verschlossen sind.

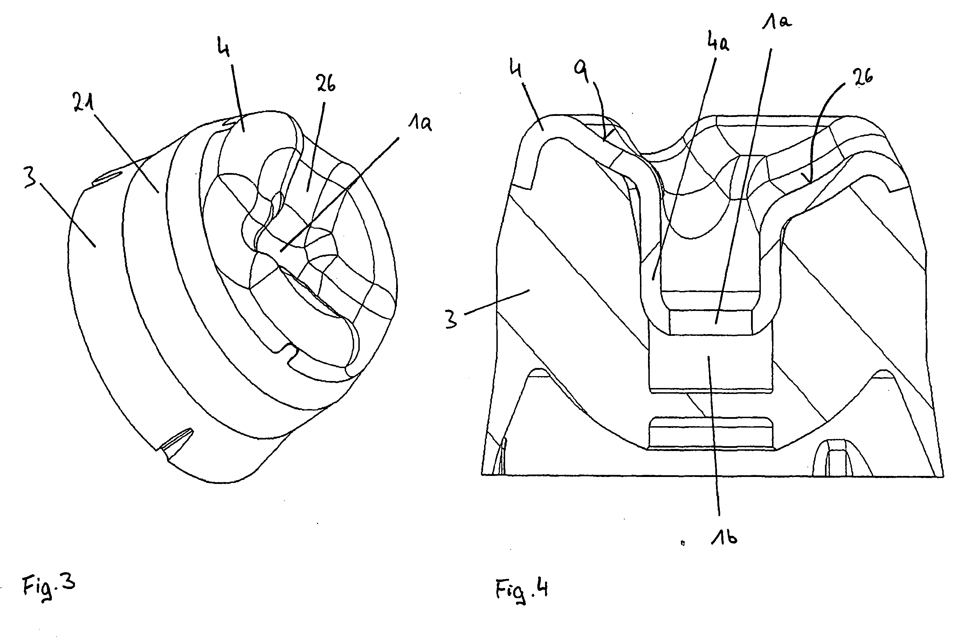

In den Fig.3 und 4 ist eine alternative Ausführungsform des Kolbens 21 mit einem als metallisches Tiefziehteil ausgebildeten Anlageteil 4 zu erkennen. Das Anlageteil 4 ist mit einem zylindrischen Kragen 4a versehen, mit dem es in die Durchgangsöffnung 1b des Grundkörpers 3 eingepresst ist. In dem zylindrischen Kragen 4a ist ebenfalls eine Durchgangsöffnung 1a vorgesehen, welche mit der Durchgangsöffnung 1b in dem Grundkörper 3 fluchtet. Der weichere Grundkörper 3 wird durch den festeren in die Durchgangsöffnung 1b hineinragenden Kragen 4a innen versteift. Die radial außen vorstehenden Dichtlippen 22 sind in sich nach wie vor elastisch und können deshalb geringfügige Bewegungen des Kolbens relativ zu der Rohrwandung ausgleichen, ohne dabei den Kontakt zu dem Rohr zu verlieren.

In der die Stirnfläche 9 des Kolbens 21 bildenden Oberfläche des Anlageteils 4 sind drei in einem Winkel von 120 Grad zueinander angeordnete Vertiefungen 26 vorgesehen, welche von der mittigen Durchgangsöffnung 1a radial nach außen verlaufen. Der Steg 7 ist in dieser Ausführungsform in der Durchgangsöffnung 1b des Grundkörpers 3 angeordnet.

Insgesamt wird durch die vorgeschlagene zweiteilige Ausführungsform des Kolbens 21 eine Möglichkeit geschaffen, den Kolben 21 hinsichtlich seiner Funktionen individuell besser auszulegen, ohne dass die Auslegung hinsichtlich der einen Funktion Nachteile für die jeweils andere Funktion zur Folge hätte.

## Patentansprüche

1. Straffervorrichtung (10) für einen Sicherheitsgurt, insbesondere in einem Kraftfahrzeug, umfassend einen Gasgenerator (17), einen in einem Rohr (16) geführten Kolben (21), der einen Druckraum (20) in dem Rohr (16) verschließt, der durch den Gasgenerator (17) mit einem Druck beaufschlagbar ist, wodurch der Kolben (21) zu einer Straffbewegung antreibbar ist, welche mittels eines an einer Stirnfläche (9) des Kolbens (21) anliegenden Massekörpers (19a) auf den Sicherheitsgurt übertragbar ist, wobei der Kolben (21) zweiteilig aus einem Grundkörper (3) und einem an der dem Massekörper (19a) zugewandten Seite des Grundkörpers (3) angeordneten Anlageteil (4) gebildet ist, wobei die Stirnfläche (9) an dem Anlageteil (4) angeordnet ist, und das Anlageteil (4) eine höhere Festigkeit als der Grundkörper (3) aufweist, **dadurch gekennzeichnet, dass** das Anlageteil (4) aus einem metallischen Tiefziehteil gebildet ist.

2. Straffervorrichtung nach Anspruch 1, **dadurch gekennzeichnet, dass** das Anlageteil (4) über eine Pressverbindung mit dem Grundkörper (3) verbunden ist.

3. Straffervorrichtung nach einem der vorangegangenen Ansprüche, **dadurch gekennzeichnet, dass** das Anlageteil (4) einen vorstehenden Kragen (4a) aufweist, mit dem es in eine an dem Grundkörper (3) vorgesehene Ausnehmung (30) mit einer korrespondierenden Formgebung hineinragt.

4. Straffervorrichtung nach einem der vorangegangenen Ansprüche, **dadurch gekennzeichnet, dass** der Grundkörper (3) und das Anlageteil (4) ineinander übergehende Durchgangsöffnungen (1a,1b) aufweisen, wovon wenigstens eine durch einen dünnwandigen Steg (7) verschlossen ist, der bei einem Überschreiten eines vorbestimmten Druckes in dem Druckraum (20) aufreißt, und eine Strömungsverbindung zwischen dem Druckraum (20) und einem in Richtung der Straffbewegung (S) hinter dem Kolben (21) befindlichen Raum (25) freigibt.

5. Straffervorrichtung nach Anspruch 4, **dadurch gekennzeichnet, dass** in der Stirnfläche (9) wenigstens eine Vertiefung (26) vorgesehen ist, welche bei an der Stirnfläche (9) anliegendem Massekörper (19a) eine Strömungsverbindung zwischen dem Raum (2) hinter dem Kolben (21) und den Durchgangsöffnungen (31,32) schafft.

## Claims

1. A tensioning device (10) for a seat belt, in particular in a motor vehicle, comprising a gas generator (17), a piston (21) guided in a tube (16), which piston (21) closes a pressurized space (20) in the tube (16), which pressurized space (20) can be applied with a pressure by the gas generator (17), which piston (21) is drivable to a tensioning movement which is transferable to the seat belt using a mass body (19a) abutting on an end surface (9) of the piston (21), wherein the pis-ton (21) is formed two-part from a base body (3) and an abutment part (4) disposed on the side of the base body (3) facing the mass body (19a), wherein the end surface (9) is disposed on the abutment part (4), and the abutment part (4) has a greater strength than the base body (3), **characterised in that** the abutment part (4) is formed from a metallic deep-drawn part.

2. The tensioning device according to claim 1, **characterised in that** the abutment part (4) is connected to the base body (3) via a press-fit connection.

3. The tensioning device according to one of the preceding claims, **characterised in that** the abutment part (4) includes a projecting collar (4a) using which it projects into an opening (30) provided on the base body (3), which opening (30) has a corresponding shape.

4. The tensioning device according to one of the preceding claims, **characterised in that** the base body (3) and the abutment part (4) have through-openings (1 a, 1 b) merging into each other, whereof at least one is closed by a thin-walled bridge (7) which tears off in the pressurized space (20) upon an exceeding of a predetermined pressure, and releases a flow-connection between the pressurized space (20) and a space (25) located behind the piston (21) in the direction of the tensioning movement (S).

5. The tensioning device according to claim 4, **characterised in that** at least one recess (26) is provided in the end surface (9), which recess (26) provides a flow connection between the space (2) behind the piston (21) and the through-openings (31, 32) when a mass body (19a) is abutting on the end surface (9).

## Revendications

1. Dispositif tendeur (10) conçu pour une ceinture de sécurité, en particulier dans un véhicule automobile, comprenant un générateur de gaz (17), un piston (21) guidé dans un tube (16) et qui ferme une chambre de pression (20) dans le tube (16), laquelle peut être soumise à l'effet d'une pression par le générateur de gaz (17), ce par quoi le piston (21) peut être entraîné dans un mouvement tendeur qui peut être transmis à la ceinture de sécurité au moyen d'un corps faisant masse (19a) adjacent à une face frontale (9) du piston (21), le piston (21) étant constitué en deux parties d'un corps de base (3) et d'une pièce d'appui (4) disposée sur le côté du corps de base (3) faisant face au corps faisant masse (19a), la surface frontale (9) étant disposée sur la pièce d'appui (4), et la pièce d'appui (4) comportant une résistance supérieure au corps de base (3), **caractérisé en ce que** la pièce d'appui (4) est constituée d'une pièce métallique emboutie.

2. Dispositif tendeur selon la revendication 1, **caractérisé en ce que** la pièce d'appui (4) est reliée au corps de base (3) par un emmanchement à force.

3. Dispositif tendeur selon l'une des revendications précédentes, **caractérisé en ce que** la pièce d'appui (4) comporte un rebord en saillie (4a) avec lequel elle dépasse dans un évidement (30) ayant une mise en forme correspondante situé sur le corps de base (3).

4. Dispositif tendeur selon l'une des revendications précédentes, **caractérisé en ce que** le corps de base (3) et la pièce d'appui (4) comportent des ouvertures de passage (1a, 1 b) se confondant, dont au moins une est fermée par un élément de cloison (7) à paroi mince, qui se déchire lors d'un dépassement d'une pression prédéfinie dans la chambre de pression (20), et libère une liaison d'écoulement entre la chambre de pression (20) et un espace (25) se trouvant derrière le piston (21) dans la direction du mouvement tendeur (S).

5. Dispositif tendeur selon la revendication 4, **caractérisé en ce que** dans la face frontale (9) est placé au moins un creux (26) qui génère une liaison d'écoulement entre l'espace (2) derrière le piston (21) et les ouvertures de passage (31, 32) lorsque le corps faisant masse (19a) est adjacent à la face frontale (9).
